Europäisches Patentamt

European Patent Office

Office européen des brevets

(11) Veröffentlichungsnummer: **0 417 041 A1**

# EUROPÄISCHE PATENTANMELDUNG

(21) Anmeldenummer: 90810648.7

(22) Anmeldetag: 29.08.90

(51) Int. Cl.⁵: **B65G 47/53**, B65G 47/66

(30) Priorität: 04.09.89 CH 3198/89

(43) Veröffentlichungstag der Anmeldung:
13.03.91 Patentblatt 91/11

(84) Benannte Vertragsstaaten:
AT BE CH DE DK ES FR GB GR IT LI LU NL SE

(71) Anmelder: **LANCO AG**
**Gurzelenstrasse 14**
**CH-4512 Bellach(CH)**

(72) Erfinder: **Ruprecht, Christoph**
**Gatterweg 11**
**CH-4512 Bellach(CH)**
Erfinder: **Schäfer, Franz**
**Amselweg 9**
**CH-2563 Ipsach(CH)**
Erfinder: **Rohner, Erhard**
**Kleinfeldstrasse 15a**
**CH-2543 Lengnau(CH)**

(74) Vertreter: **Frauenknecht, Alois J. et al**
**c/o PPS Polyvalent Patent Service AG,**
**Mellingerstrasse 1**
**CH-5400 Baden(CH)**

(54) Verfahren und Vorrichtung zum Umlenken von auf einer Ebene bewegten Werkstückträgern.

(57) In der automatischen und der flexiblen Fertigung werden häufig lineare Förderbahnen miteinander verbunden. Dabei ergeben sich Probleme in der Bahnführung und auch beim Steuern bzw. Aufeinanderauflaufen der verwendeten Werkstückträger.

Erfindungsgemäss wird dieses Problem durch ein in der Ecke der zusammengeführten Bahnen angeordnetes Reibrad (2, 2″) realisiert, welches einen Zapfen (29) mitführt und den Werkstückträger (20) in die nächste Bahn bringt. Durch den Einbezug einer Drehmoment-Kupplung (3) lassen sich die Werkstückträger (20) auch in den Kreisbahnen problemlos stauen.

FIG.1

# VERFAHREN UND VORRICHTUNG ZUM UMLENKEN VON AUF EINER EBENE BEWEGTEN WERKSTÜCKTRÄGERN

Die vorliegende Erfindung betrifft ein Verfahren zum Umlenken von in einer Ebene bewegten Werkstückträgern in einer Förderanlage, ferner eine Umlenkvorrichtung für eine Förderanlage mit wenigstens einem Transportband.

Derartige Förderanlagen dienen zur Beförderung von Werkstückträgern, vornehmlich zu Montagezwecken, wobei die Werkstückträger entlang einer Förderbahn gleiten oder rollen und dabei durch Reibkontakt mit einem Transportband von diesem fortbewegbar und im Staubereich durch Lösen des Reibkontaktes staubar sind.

Solche Förderanlagen sind bekannt (DE-AS 12 67 680, CH-PS 669 167). Dort sind die Förderbehälter bzw. Werkstückträger mit je vier Laufrädern versehen sowie an ihrer Unterseite mit einer Bodenplatte bzw. einem Reibschuh, welcher federnd nach unten auf das schmaldimensionierte Förder- bzw. Transportband gedrückt wird. Insbesondere müssen Teile der Werkstückträger spurgenau ineinandergreifen, um den Reibschuh anzuheben.

Eine derartige Einrichtung mit verbesserten Förder- und Staubedingungen wurde anlässlich der Hannover-Messe 1989 durch die Firma Lanco AG, CH-4512 Bellach, präsentiert. Die gezeigte Lösung weist an der Unterseite der Werkstückträger, längs zur Förderbahn, verschwenkbare Tragarme auf, an denen endseitig eine Reibplatte befestigt ist, welche sich beim Verschwenken der Tragarme mit ihrer Reibfläche parallel zur Mitnahmefläche des Transportbandes erstreckt.

Es ist Aufgabe der Erfindung, ein Verfahren und eine Vorrichtung zu schaffen, welche erlauben, lineargeführte Werkstückträger umzulenken in andere Bahnen und unter anderem Kreisführungen der Werkstückträger zu ermöglichen.

Diese Aufgabe wird dadurch gelöst, dass durch einen in den glatten, peripheren Bereich eines umlaufenden Antriebsrades ragenden Zapfen des Werkstückträgers dieser kreisbogenförmig in der Drehrichtung des Rades geführt und damit der Werkstückträger umgelenkt wird.

Die erfindungsgemässe Vorrichtung ist dadurch charakterisiert, dass im Zentrum eines durch den Werkstückträger zu beschreibenden Kreisbogens ein Antriebsrad mit einem peripheren Reibring vorgesehen ist, auf dem sich wenigstens eine am Werkstückträger angeordnete Führungsrolle abwälzt, welche sich ihrerseits an einer äusseren Leitschiene abrollt.

Die erfindungsgemässe Lösung ermöglicht, beliebige modulare lineare Förderanlagen miteinander zu verbinden und den Werkstückträger umzulenken und ggf. auch auf den vollen Kreis zu führen.

In abhängigen Ansprüchen sind Weiterbildungen des Erfindungsgegenstandes beschrieben.

Die Lösung nach Anspruch 2 mit der beschriebenen Führungsrolle reduziert die Reibungskräfte und gewährleistet damit einen erschütterungsfreien Lauf des Werkstückträgers.

Die Umlenkvorrichtung nach Anspruch 4 erlaubt auch in der Bewegung auf der Kreisbahn ein Stauen der Werkstückträger, bei durch die Drehmomentkupplung vorbestimmten Staubedingungen.

Bewährt hat sich gemäss Anspruch 5 eine an sich bekannte Hysterese-Kupplung, deren Übertragungs-Drehmoment durch die Einstellung des Abstandes der Kupplungsscheiben bestimmbar ist.

Umlenkvorrichtungen mit einer Leitschiene von 90° oder annähernd 180° erfüllen die meisten Anforderungen in der flexiblen Fertigung, vgl. Anspruch 6.

Die Umlenkvorrichtung, Anspruch 7, erlaubt, bei schrägge stelltem Antriebsrad in der Vertikalebene vorhandene Winkelfehler auszugleichen und/oder geringe Höhenunterschiede zwischen den linearen Führungsbahnen zu realisieren.

Bewährt haben sich die in Anspruch 8 und 9 beschriebenen Hubweichen, womit die Geradeausfahrt auch bei der Umlenkvorrichtung durch ein einfaches Ansteuern der pneumatischen Elemente durchführbar ist.

Absenkbare Hub-Führungschienen gemäss Anspruch 10 gewährleisten ein problemloses Überführen des Werkstückträgers von einer Bahn zur nächsten.

Nachfolgend wird anhand von praktisch realisierten Ausführungsbeispielen die Erfindung näher beschrieben. Gleiche Funktionsteile sind dabei mit gleichen Bezugsziffern versehen.

Es zeigen:

Fig. 1 eine beispielsweise Umlenkvorrichtung mit einem bewegten Werkstückträger in einer Teil-Schnittdarstellung,

Fig. 2 die Umlenkvorrichtung Figur 1 in Draufsicht mit schematisch eingezeichnetem Werkstückträger während des Umlenkvorgangs,

Fig. 3 eine Seitenansicht eines Endstücks der Förderanlage mit darauf befindlichem Werkstückträger,

Fig. 4 eine Vorderansicht derselben Anlage,

Fig. 5 einen Ausschnitt der Reibplatte des Werkstückträgers in Förder- und Stauposition,

Fig. 6 die Umlenkvorrichtung Figur 2 mit Führungsschienen und Umlenkorganen,

Fig. 7a eine schematische Darstellung von Weichenteilen bei einer Kreisfahrt des Werkstückträgers,

Fig. 7b dieselbe Darstellung bei Geradeausfahrt,

Fig. 8 eine konstruktive Ausgestaltung der Weichenteile Fig. 7a, 7b und

Fig. 9 eine beispielsweise Anordnung der Umlenkvorrichtungen in einem Montageautomaten für die flexible Fertigung und Montage.

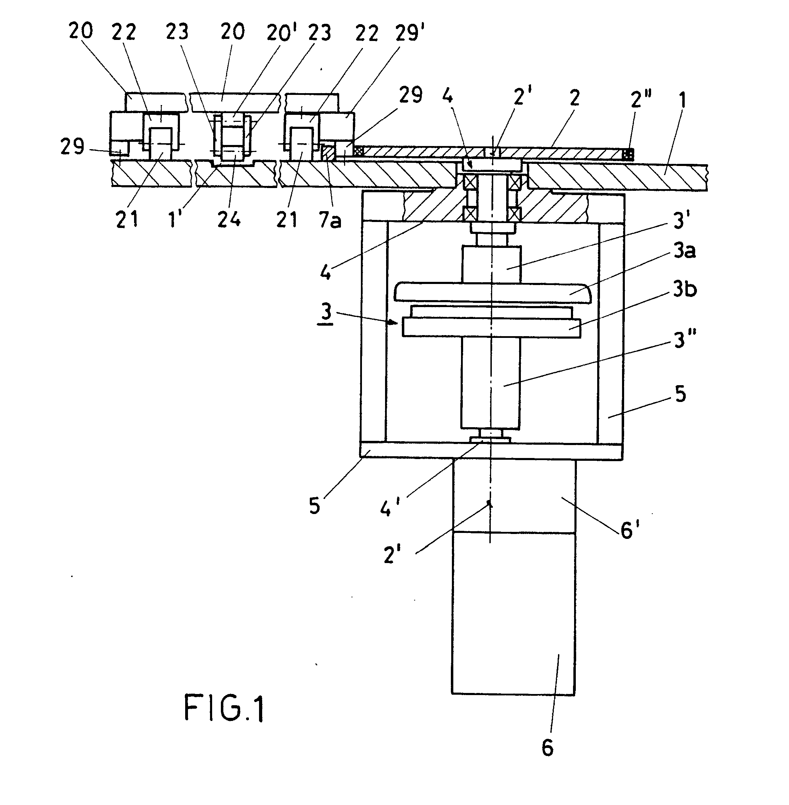

In Fig. 1 ist mit 1 eine Weichenplatte bezeichnet. In ihr gelagert ist ein Antriebsrad 2 mit seiner Achse 2′ und mit einem äusseren Reibring 2″. Die Achse 2′ führt über Lagerstellen 4 zu Kupplungszapfen 3′, Kupplungsscheiben 3a, 3b, einem weiteren Kupplungszapfen 3″ sowie einer unteren Lagerstelle 4′ im Endteil eines Kupplungsgehäuses 5. Hier ist ein mit einem Getriebe 6′ ausgerüsteter Elektromotor 6 angeflanscht, der dem Antrieb des Antriebsrades 2 dient.

Auf der Weichenplatte befindet sich der auf Rädern 21 mit Radaufhängungen 22 versehene Werkstückträger 20. Seitlich weist dieser Supports 29′ mit Führungsrollen 29 auf; in seiner Mittelachse befindet sich eine hier frei liegende Reibplatte 24 mit Tragarmen 23.

Die Weichenplatte 1 ist in diesem Bereich durch das Segment einer ringförmigen Nut 1′ ausgenommen. Konzentrisch zur Achse 2′ des Antriebsrades 2 ist das Segment einer erhabenen Leitschiene 7a angebracht.

Das Antriebsrad 2 ist als volle Leichtmetall-Scheibe ausgebildet und weist einen durch ein Spritzgussverfahren aufgebrachten Reibring 2″ aus Polyurethan auf.

Die Kupplung 3 ist eine sogenannte Hysterese-Kupplung mit Permanent-Magneten und entsprechend dem einzustellenden Übertragungsmoment zueinander beabstandeten Kupplungsscheiben 3a, 3b.

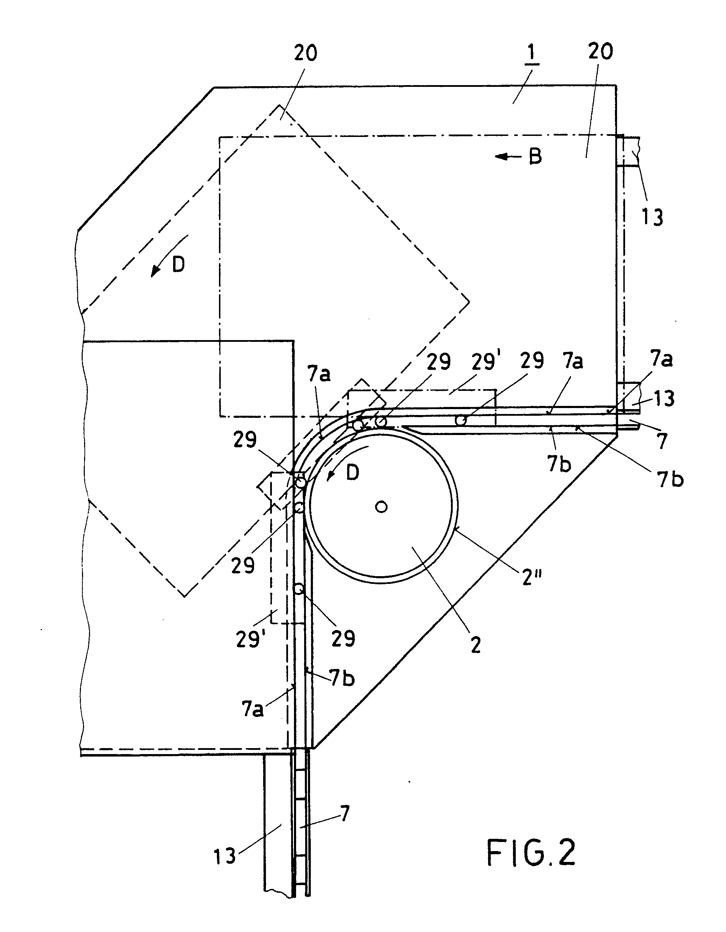

Die Darstellung Fig. 2 zeigt eine 90° Umlenkung des Werkstückträgers in drei charakteristischen Phasen. Die Weichen platte 1 ist hier an den zueinander in 90° zusammengeführten Ecken von Tragschienen 13 angeordnet. Die entsprechenden Leitschienen 7 weisen gerade Teile 7a einer äusseren und 7b einer inneren Leitschiene auf und sind tangential zum Umfang des Antriebsrades 2 ausgerichtet.

Der in Bewegungsrichtung B einlaufende Werkstückträger wird mit jeweils einer Führungsrolle 29 vom Reibring 2″ erfasst und kreisbogenförmig in der Drehrichtung D des Antriebsrades 2 mitgeführt. Die erste Führungsrolle 29 rollt dabei einerseits am Reibring 2″ und andererseits an der äusseren Leitschiene 7a ab, bis sie nach einer 90° Umlenkung auf die innere Leitschiene 7b trifft. Die zweite Führungsrolle 29 erfährt denselben Bewegungsablauf. Die Stellung zur konventionellen Weiterführung des Werkstückträgers 20 nach dessen Umlenkung ist hier mit ausgezogenen Linien bezeichnet; die Ausgangsstellung sowie die Zwischenstellung sind gestrichelt dargestellt.

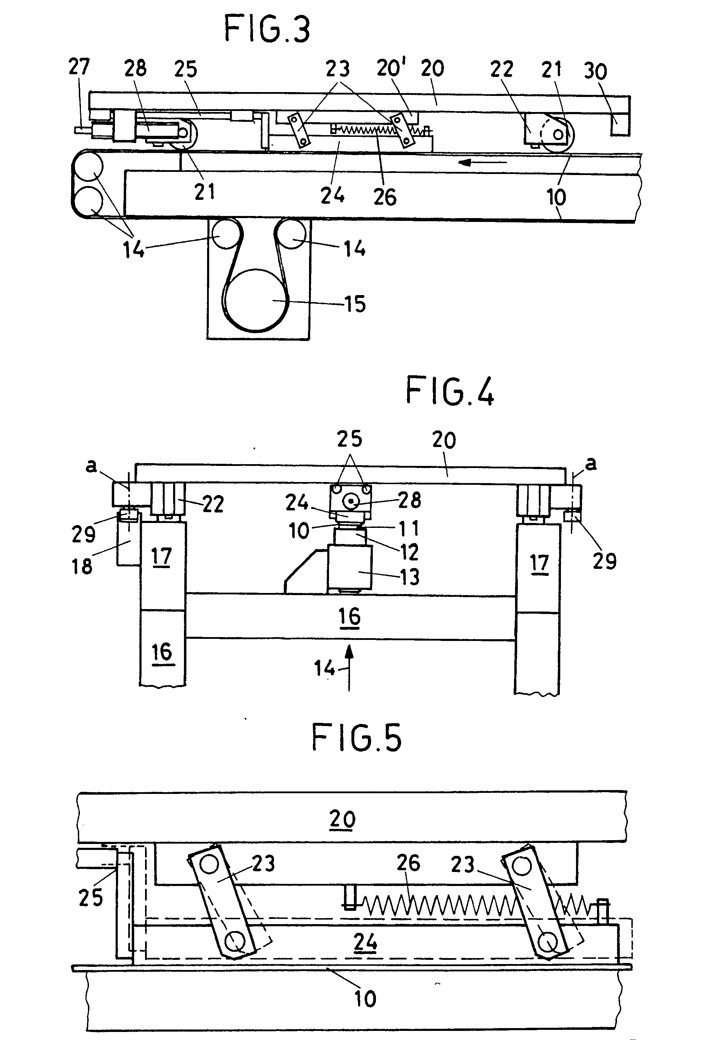

Im einzelnen zeigt Fig. 3 im wesentlichen eine Seitenansicht des Werkstückträgers 20 oberhalb des Transportbandes 10. Das Transportband 10 läuft in der Figur von rechts nach links und wird über Umlenkrollen 14 geführt und von der Antriebsrolle 15 angetrieben.

Der Werkstückträger 20 weist vier Räder 21 samt Radaufhängungen 22 auf, wobei im Falle des vorderen Radpaares, also links in der Figur, nur das hintere Rad gezeichnet wurde, um die Sicht auf das Gestänge 25 und den hydraulischen Stossdämpfer 28 freizugeben. Die Reibplatte 24 ist mit zwei Tragarmpaaren 23 mit der Unterseite des Werkstückträgers 20 schwenkbeweglich verbunden.

Die Reibplatte 24 befindet sich in Betriebs- bzw. Mitnahmeposition. Falls der Stössel 27 auf ein Hindernis bzw. auf die Hinterkante 30 eines Werkstückträgers 20 auflaufen sollte, wird dieser gepuffert in den hydraulischen Stossdämpfer 28 hineingedrückt und betätigt gleichzeitig das Gestänge 25 derart, dass die Reibplatte 24 gegen die Förderrichtung nach rechts in der Figur verschoben und damit gemäss dem Verschwenkungsradius der Tragarme 23 vom Transportband 10 abgehoben wird. Die Rückstellfeder 26 stellt sicher, dass bei Druckentlastung des Stössels 27 bzw. bei Wegfall eines Staus die Reibplatte 24 sich wieder auf das Transportband 10 absenkt unter Verschwenkung der Tragarme 23 nach links unten sowie weiterer Verschiebung des Gestänges 25 und des Stössels 27 nach links aussen.

Fig. 4 zeigt eine Vorderansicht der in Fig. 3 dargestellten Anlage, und zwar von links her betrachtet. In dieser Figur wird deutlich, dass das Transportband 10 auf Rollen 11 läuft, die ihrerseits wieder in Rollenlagern 12 gelagert sind. Die Rollenlager 12 befinden sich oberhalb einer Tragschiene 13. Ansonsten sind Stützprofile 16 erkennbar, welche die Förderbahn 17 stützen, welche normalerweise aus zwei Parallelspuren (links und rechts) besteht, in einem Abstand, der an den Abstand der darauf abrollenden Räder 21 des Werkstückträgers 20 angepasst ist.

Zusätzlich zu den in Fig. 3 gezeigten Teilen erkennt man links in Fig. 4 eine U-förmige Führungsschiene 18, in die eine am Werkstück- bzw. Produktträger seitlich angebrachte Führungsrolle 29 eingesetzt ist. Die Teile 18 und 29 sorgen für eine spurgerechte Führung des Werkstückträgers. Normalerweise befinden sich auf der gleichen Seite eines Werkstückträgers zwei Führungsrollen hintereinander im mittleren Bereich. In bestimmten Fällen kann es sich empfehlen, auch auf der anderen Seite des Werkstückträgers solche Führungsrollen anzubringen.

In Fig. 5 ist ein Ausschnitt aus Fig. 3 gezeigt. Dabei entspricht die in ausgezogenen Linien dargestellte Lage des Gestänges 25, der Tragarme 23 und der Reibplatte 24 der Mitnahme- bzw. Betriebssituation. Dagegen entspricht die strichliniert gezeichnete Lage der vorgenannten Teile der Stausituation, d.h. die Reibplatte 24 ist angehoben und ein Reibkontakt mit dem Transportband 10 entfällt.

Aus dieser Figur dürfte auch ersichtlich werden, welche Dimensionierungen sich empfehlen und dass sich bei Absenkung und Mitnahme der Reibplatte 24 der Reibkontakt zwischen Unterseite der Reibplatte 24 und der Oberfläche des Transportbandes 10 selbsttätig erhöht, bzw. etwaige Unebenheiten im Transportband 10 ausgeglichen werden.

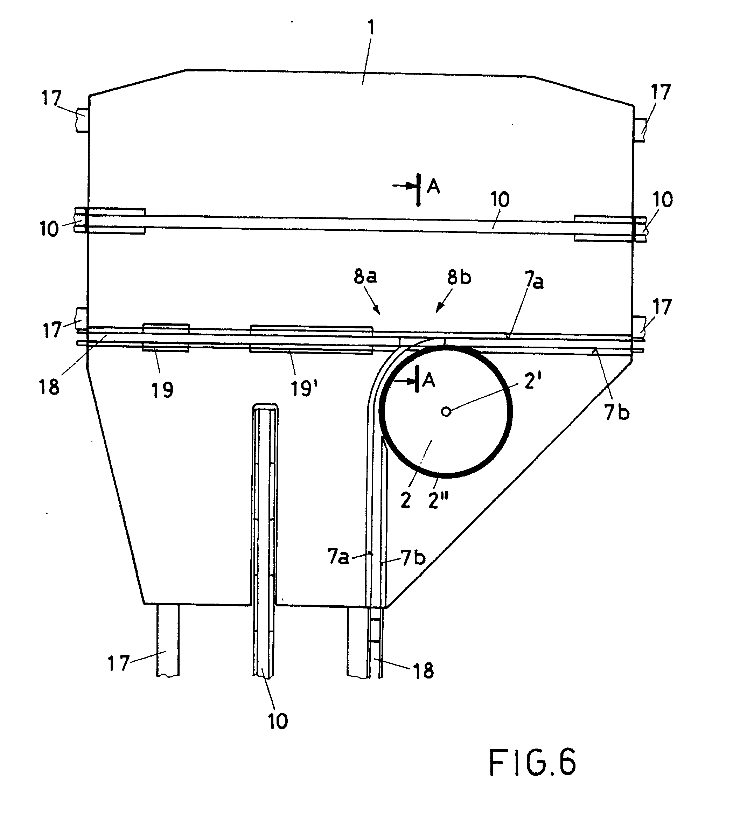

Die in Fig. 2 dargestellte Umlenkvorrichtung ist in Fig. 6, ohne Werkstückträger, mit weiteren funktionellen Einzelheiten dargestellt. Das Transportband 10 ist horizontal über die Weichenplatte 1 geführt und steht orthogonal zu einem ebensolchen, jedoch getrennt geführten Transportband 10 vor der Förderbahn 17, in welcher die Räder 21 bewegt werden. In der Förderbahn 17 sind Hubführungsschienen 19 and 19' eingelassen, welche nach unten in vertikaler Richtung ausrückbar sind. - Dies ist notwendig, damit die Räder 21 sowie die zentrale Reibplatte 24 bei der Umlenkung die Förderbahn 17 bzw. die Führungsschienen 18 queren können. Die Führungsschiene 18 ist durch die innere und äussere Leitschiene 7a, 7b zum Antriebsrad 2 geführt. Die äussere Leitschiene 7a ist dabei konzentrisch um die Achse 2' in einem Abstand entsprechend des Durchmessers der Führungsrolle 29 um das Antriebsrad 2 herum, kreisbogenförmig geführt; die Schiene 7b endet auf beiden Seiten spitzwinklig auslaufend, tangential gerichtet vor dem Reibring 2" des Antriebsrades 2.

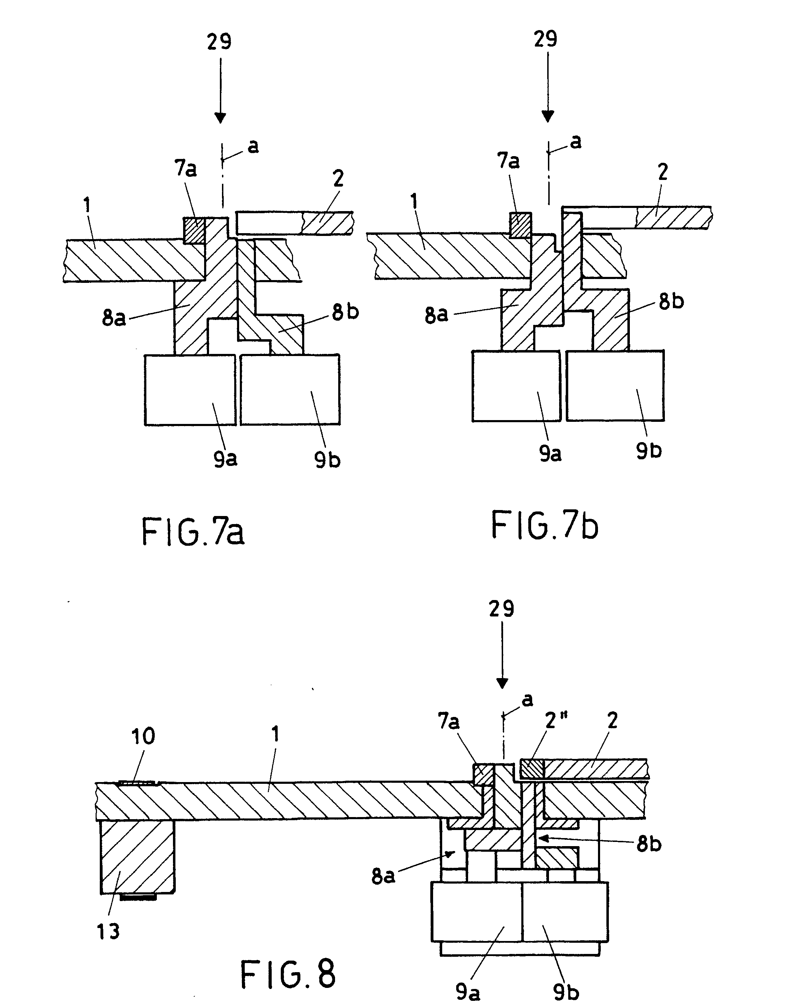

Die wahlweise Umlenkung bzw. Geradführung des Wagens erfolgt durch Hub-Weichen 8a und 8b, welche durch den vertikalen Schnitt A-A in ihren beiden Positionen in Fig. 7a und 7b dargestellt sind.

In Fig. 7a ist die Weiche bei der Umlenkung des Werkstückträgers um 90° dargestellt. Neben den bereits beschriebenen Bestandteilen ist hier die Lage der Achse a der Führungsrolle 29, vgl. Fig. 4, eingezeichnet. Die äussere Hub-Weiche 8a ist dabei durch einen Kurzhub-Zylinder 9a nach oben ausgefahren und zwingt die nichtdargestellte Führungsrolle 29, dem Zentrum des Antriebsrades 2 kreisbogenförmig zu folgen. Die in nere Hub-Weiche 8b ist hier durch den weiteren Kurzhub-Zylinder 9b in ihrer unteren Endstellung eingefahren.

Die Geradeausfahrt des Werkstückträgers 20 ist in ihren Weichenstellungen in der Fig. 7b mit entsprechend umgekehrten Verhältnissen ersichtlich.

Die konstruktive Ausgestaltung dieser Teile ist in Fig. 8 zu sehen, wobei die in den Fig. 7a, 7b einstückig gezeichneten Teile durch verschiedenartige Schraffuren in einzelne, an sich bekannte Bauelemente zerlegt ist. Linksseitig ist das Transportband 10 mit seiner Tragschiene 13 eingezeichnet.

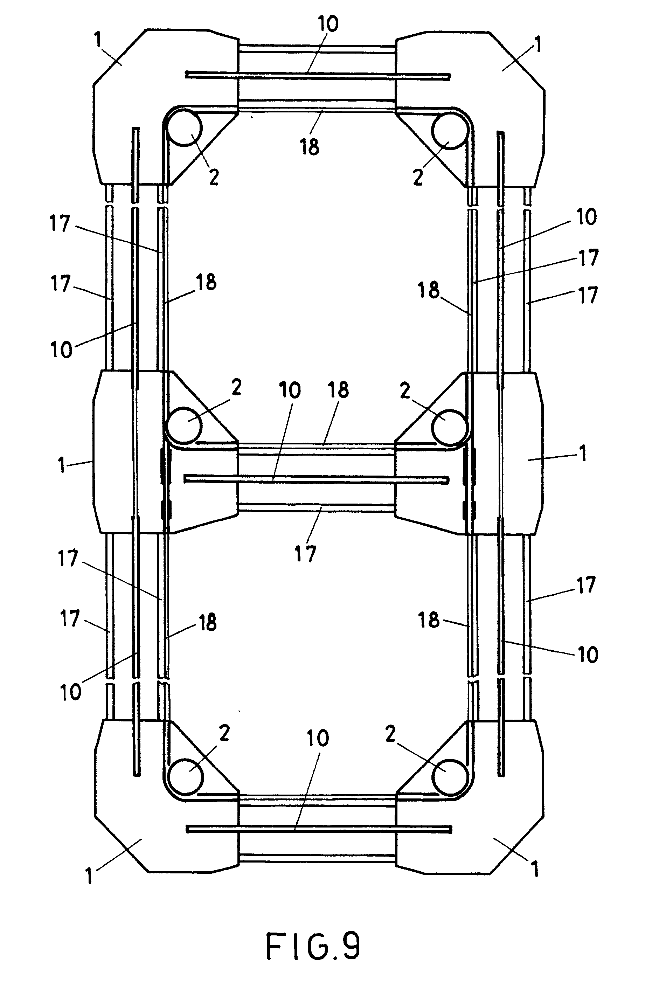

Sämtliche bisher beschriebenen Funktionsteile finden in einer Bahnführung nach Fig. 9 Anwendung. Diese erlaubt, durch geeignete Steuerung die Werkstückträger auf der grossen Bahn entsprechend den Längsabmessungen zu führen und/oder durch einfaches Umschalten der Weichenelemente auf halbe Bahnen zu führen. Die hauptsächliche Anwendung derartiger, modular aufgebauter Elemente liegt im Bereich der flexiblen Fertigung (FMS) und hat sich bereits für Montageanwendungen bewährt.

Die konstruktive Ausgestaltung der Erfindung lässt sich weitgehend mit konventionellen Mitteln realisieren. So sind die Transportbänder handelsübliche Förderbänder, die Reibplatten lassen sich mit den von Bremsbelägen bekannten Materialien realisieren und die Führungsrollen 29 sind handelsübliche Nadellager (Typ KR 16, INA Wälzlager Schäffler KG, D-6522 Herzogenaurach). Als Motoren für die Antriebsräder 2 haben sich Getriebemotoren (Bodine 34R-6BFCI-Z3, Bodine Electric Corp., Chicago, Illinois) bewährt. Die verwendeten Hysterese-Kupplungen sind ebenfalls im Handel erhältlich (Typ 124498, Thyssen Edelstahlwerke AG, D-4600 Dortmund); sie sind im aufgezeigten Ausführungsbeispiel auf ein Übertragungsdrehmoment von 5 Nm, bei einem Luftspalt von 1,5 mm, eingestellt.

Der Richtungswechsel des Werkstückträgers erfolgt durch die Ansteuerung von Kurzhub-Zylindern (Typ CQ2B32-10D, SMC Corp. 16-4 Tokyo, 105, Japan). Dieselben Kurzhub-Zylinder sind für die Hub-Weichen und die Hub-Führungsschienen verwendet.

Selbstverständlich kann der Erfindungsgegenstand andersartig ausgelegt werden, so dass beispielsweise bei entsprechender Dimensionierung der Werkstückträger der Führungsrollen und eventueller weiterer, pneumatisch gesteuerter Blockierglieder auch maschinelle Bearbeitungen an den zu transportierenden Werkstücken vorgenommen werden können.

**Ansprüche**

1. Verfahren zur Umlenkung von auf einer Ebene bewegten Werkstückträgern in einer Förderanlage, dadurch gekennzeichnet, dass durch wenigstens einen in den glatten, peripheren Bereich eines umlaufenden Antriebsrades ragenden Zapfen des Werkstückträgers dieser kreisbogenförmig in der Drehrichtung des Rades geführt und damit der Werkstückträger umgelenkt wird.

2. Verfahren nach Anspruch 1, dadurch gekennzeichnet, dass die Umlenkung durch eine am Antriebsrad und/oder an einer zu diesem konzentrisch ausgebildeten Leitschiene über eine am Zapfen angeordnete Führungsrolle ausgeführt wird.

3. Umlenkvorrichtung für eben bewegte Werkstückträger in einer Förderanlage mit wenigstens einem Transportband, dadurch gekennzeichnet, dass im Zentrum eines durch den Werkstückträger (20) zu beschreibenden Kreisbogens ein Antriebsrad (2) mit einem peripheren Reibring (2'') vorgesehen ist, dem sich wenigstens eine am Werkstückträger (20) angeordnete Führungsrolle (29) abwälzt, welche sich ihrerseits an einer äusseren Leitschiene (7a) abrollt.

4. Umlenkvorrichtung nach Anspruch 2, dadurch gekennzeichnet, dass das Antriebsrad (2) durch einen Elektromotor (6) mit zwischengeschalteter Drehmomentkupplung (3,3',3'') angetrieben ist.

5. Umlenkvorrichtung nach Anspruch 3, dadurch gekennzeichnet, dass die Kupplung (3,3'3'') eine Hysterese-Kupplung mit permanenten Magneten ist.

6. Umlenkvorrichtung nach einem der Ansprüche 3 oder 4, da durch gekennzeichnet, dass die äussere Leitschiene (7a) einen Winkel von wenigstens annähernd 90° oder wenigstens annähernd 180° einschliesst.

7. Umlenkvorrichtung nach Anspruch 3, dadurch gekennzeichnet, dass die Achse (2') des Antriebsrades (2) zu einem anschliessenden Transportband einen von 90° abweichenden Winkel bildet.

8. Umlenkvorrichtung nach Anspruch 3, dadurch gekennzeichnet, dass zumindest in den äusseren Führungsbahnen HubWeichen (8a,8b) vorgesehen sind.

9. Umlenkvorrichtung nach Anspruch 8, dadurch gekennzeichnet, dass die Hub-Weichen (8a,8b) durch pneumatische Elemente ein- und ausrückbar sind.

10. Umlenkvorrichtung nach einem der Ansprüche 3 bis 9, dadurch gekennzeichnet, dass tangential zum Kreisbogen eine Führungsschiene (18) vorgesehen ist, welche partiell durch Hub-Führungsschienen (19,19') ausrückbar ausgestaltet ist.

FIG.1

14 080 PPS/ Fk

FIG.2

14080 PPS/Fk

# FIG.3

# FIG.4

# FIG.5

14 080 PPS/Fk

FIG.6

14080 PPS/Fk

FIG.7a

FIG.7b

FIG.8

14 080 PPS/Fk

10

FIG.9

14080 PPS/Fk

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁴) |
|---|---|---|---|
| A | DE - A1 - 3 513 381 <br> (MOELLER) <br>      * Fig. 11; Spalte 4, Zeilen <br>      9-17 * <br>      -- | 1,3 | B 65 G 47/53 <br> B 65 G 47/66 |
| A | DE - A1 - 2 745 314 <br> (REDLAND) <br>      * Fig. 1; Anspruch 1 * <br>      -- | 1,3 | |
| A | CH - A - 543 434 <br> (RALFS) <br>      * Fig. 2 * <br>      -- | 1,3 | |
| A | US - A - 4 300 673 <br> (VON VIEBAHN) <br>      * Fig. 1 * <br>      -- | 1,3 | |
| A | DE - A - 2 353 036 <br> (COLUBRA) <br>      * Fig. 1; Ansprüche 1,7 * <br>      -- | 1,4,6 | |
| D,A | CH - A5 - 669 167 <br> (SIGMA) <br>      * Fig. 4 * <br>      ---- | 1,3 | RECHERCHIERTE SACHGEBIETE (Int Cl⁴) <br><br> B 65 G |

Der vorliegende Recherchenbericht wurde für alle Patentansprüche erstellt.

| Recherchenort | Abschlußdatum der Recherche | Prüfer |
|---|---|---|
| WIEN | 08-11-1990 | BAUMGARTNER |